# EUROPEAN PATENT APPLICATION

(11) **EP 4 759 655 A1**
(43) Date of publication of application: **17.06.2026**
(21) Application number: 24220105.1
(22) Date of filing: 16.12.2024
(51) Int. Cl.: B60T 17/08

(54) **SPRING BRAKE ACTUATOR FOR MOTOR VEHICLE**

(71) Applicant: ZF CV Systems Europe BV, 1170 Brüssel (BE)
(72) Inventor: ZBYLUT, Michal, 50-540 Wroclaw (PL); JUNGMANN, Hans-Christian, 69517 Gorxheimertal (DE)
(74) Representative: Schäferjohann, Volker

(57) **Abstract**

The invention relates to a spring brake actuator (1) for an air brake system of a motor vehicle, in particular of a commercial vehicle, comprising a brake cylinder (2) having a spring chamber (12), a parking pressure chamber (14), and a spring brake piston assembly (9) that is movably disposed inside the brake cylinder (2) and sealingly separates the spring chamber (12) from the parking pressure chamber (14), wherein the spring chamber (12) comprises a compression spring (11) that is configured to push the spring brake piston assembly (9) from a retracted position towards an extended position as a function of pressurized air being released from the parking pressure chamber (14), wherein the spring brake piston assembly (9) is configured to move towards the retracted position as a function of pressurized air being introduced into the parking pressure chamber (14); and an internal breather valve (21) in fluid communication with the spring chamber (12) and configured to allow for pressure compensation in the spring chamber (12) when the spring brake piston assembly (9) moves towards the extended position. It is proposed to mount the internal breather valve (21) to the spring brake piston assembly (9) in direct fluid communication between the spring chamber (12) and the parking pressure chamber (14).

## Description

The present invention relates to a spring brake actuator for an air brake system of a motor vehicle, in particular of a commercial vehicle, comprising a brake cylinder having a spring chamber, a parking pressure chamber, and a spring brake piston assembly that is movably disposed inside the brake cylinder and sealingly separates the spring chamber from the parking pressure chamber, wherein the spring chamber comprises a compression spring that is configured to push the spring brake piston assembly from a retracted position towards an extended position as a function of pressurized air being released from the parking pressure chamber, wherein the spring brake piston assembly is configured to move towards the retracted position as a function of pressurized air being introduced into the parking pressure chamber; and an internal breather valve in fluid communication with the spring chamber and configured to allow for pressure compensation in the spring chamber when the spring brake piston assembly moves towards the extended position.

In spring brake actuators of the aforementioned type, the parking pressure chamber is normally pressurized to a predetermined pressure level to keep the compression spring in a compressed state, and thus to keep the spring brake piston assembly in its retracted position. The main braking operation during the operation of the motor vehicle is conducted by a service brake portion of the brake actuator without involvement of the spring brake piston assembly. When the conductor of the motor vehicle, or an electronic control system, intends to activate a parking brake function, pressure is withdrawn from the parking pressure chamber such that the pneumatic pressure which acts against the compression spring decreases. As a consequence thereof, the compression spring can expand and push the spring brake piston assembly towards the extended position, thus affecting the braking mechanism that is coupled to the spring brake actuator. Likewise, when there is a pneumatic failure in the air supply to the brake actuator, it may occur that the pressure in the parking pressure chamber is depleted. In these so-called emergency situations, also the spring brake piston assembly is pushed towards the extended position by expansion of the compression spring in an emergency braking functionality. In that sense, the parking pressure chamber is also an emergency pressure chamber of sorts.

When the compression spring expands, and the spring brake piston assembly moves towards the extended position, the volume of the spring chamber increases. In contrast, when moving back towards the retracted position, the volume inside the spring chamber decreases as the pressure inside the parking pressure chamber increases. To avoid unwanted positive or negative pressure buildup inside the spring chamber which would hinder the desired operation of the spring brake piston assembly, conventional spring brake actuators such as the one mentioned hereinabove use the internal breather valve to ventilate air into the spring chamber or out of the spring chamber such as to maintain neutral, mostly ambient, pressure inside the spring chamber. A spring brake actuator having such an internal breather valve is for example known from WO 12164587 A1.

The internal breather valves known in the prior art including the example above, are arranged in the spring brake actuator such that a fluid communication is established between the spring chamber on one hand side and the service brake chamber on the other hand side. This works in most practical scenarios wherein when the parking brake functionality is employed, the service brake chamber is open to ambient pressure such that air can move freely through the service pressure chamber depending on the movement of the spring brake piston assembly. There is, however, the potential limitation in the conventional systems of the prior art that the service pressure chamber may not be open to the environment, for example in case the service supply line which is in fluid communication with the service pressure chamber is closed. In that case, expansion of the compression spring inevitably leads to negative pressure inside the spring chamber which in turn reduces the resulting spring force acting on the spring brake piston assembly, thereby reducing the maximum force employed by the spring brake piston assembly to any brake mechanism that may be coupled to the spring brake actuator. Also, it may occur at least theoretically that residual air trapped in the spring chamber hinders the spring brake piston assembly from being restored back fully into the retracted position when the parking pressure chamber is pressurized again.

It was therefore an object of the invention to improve the spring brake actuators of the prior art such that the disadvantages and challenges mentioned hereinabove may be overcome as much as possible. In particular, it was an object of the invention to improve the design of the conventional spring brake actuators such that the venting functionality for the spring chamber during movement of the spring brake piston assembly is improved without compromising functionality of the spring brake actuator.

The invention attains this object by suggesting a spring brake actuator according to claim 1. In particular, the invention suggests to improve a spring brake actuator of the type mentioned hereinabove by mounting the internal breather valve to the spring brake piston in direct fluid communication between the spring chamber and the parking pressure chamber. In other words, the invention suggests to move the internal breather valve away from a direct interaction with the service pressure chamber and instead venting the air from the spring chamber directly into the parking pressure chamber. The invention is based upon the realization that in order for the spring brake piston assembly to move, the pressure inside the parking pressure chamber must inevitably be reduced sufficiently far for the compression spring to expand and move the spring brake piston assembly outwards. Therefore, at some point, the pressure inside the parking pressure chamber will be low enough for the internal breather valve to be opened such that residual air in the parking pressure chamber may be vented into the spring chamber for pressure compensation, at the same time also improving the expansion movement of the spring brake piston assembly. The invention provided the additional advantage that the suggested solution makes the system completely independent from the state of the service pressure chamber and any service supply lines connected thereto. The spring brake actuator according to the invention is no longer sensitive to blockings or other malfunctions in the service line circuits or the service pressure chamber itself. It works reliably in all systems in the same manner and contributes to providing more reliable braking force generation by the spring brake piston assembly.

In a preferred embodiment, the internal breather valve is configured to close upon pressure building up in the parking pressure chamber and further configured to open upon pressure in the parking pressure chamber dropping below a predetermined threshold to allow for the pressure compensation. When the internal breather valve is in its closed state, i.e. when the parking pressure chamber is pressurized to restore the retracted position of the spring brake piston assembly, it can be assumed that the motor vehicle carrying the spring brake actuator is in a state where breaking is no longer required such that the service brake chamber will be unpressurized. Residual pressure in the spring chamber can in this instance be withdrawn from the spring chamber through the service pressure chamber in a conventional manner, or through a dedicated exhaust port provided e.g. on the spring chamber. Herein, "predetermined threshold" is understood to preferably lie between atmospheric pressure and the release pressure, i.e. the pressure needed to compress the spring of the spring brake portion. The threshold may be tuned according to use-case-specific needs.

In a further preferred embodiment, the spring brake actuator comprises a service pressure chamber, wherein the spring brake piston assembly comprises a ram portion that in configure to extend into the service pressure chamber when moving towards the extended position, wherein the ram portion comprises an internal air passage for fluid communication between the spring chamber and the service pressure chamber; wherein the spring brake piston further comprises a sealing element that engages the ram portion and is positioned to close the air passage when the spring brake piston assembly is in the retracted position, and to open the air passage when the spring brake piston assembly is in the extended position. When the spring brake piston assembly is in the retracted position, the sealing element reliably prevents air bleeding from the service pressure chamber in case of pressurization into the spring chamber. The suggested design is simple yet effective.

In a further preferred embodiment, the spring brake actuator comprises a flange portion, wherein the brake cylinder comprises a spring brake portion and a service brake portion, both mounted to the flange portion, and the flange portion comprises a ram passage extending through the flange generally coaxially to the stroke axis, and wherein the sealing element is arranged adjacent to, and preferably inside of, the ram passage.

In further preferred embodiments, the sealing element may be dimensioned sufficiently such as to allow for limited tilting movement, for example within a range of +- 5° around the stroke axis, of the spring brake piston assembly and particularly the ram portion thereof, to compensate for movement tolerances during operation of the spring brake actuator.

In a further preferred embodiment, the spring brake piston assembly comprises a piston that slidingly and sealingly engages the brake cylinder, and the internal breather valve is arranged in a recess extending through the piston from the spring chamber to the parking brake pressure chamber.

Preferably, the spring brake actuator is designed to extend about a stroke axis, and the spring brake piston assembly extends, and is configured to move, preferably coaxially, along the stroke axis, wherein the internal breather valve is positioned at a radial offset from the stroke axis, preferably parallel to the stroke axis.

The internal breather valve is preferably mounted into the recess by mutually corresponding threaded portions or similar fastening meanings. It may be advantageous to provide for a releasable fastening of the internal breather valve in the recess to allow for easy maintenance during the lifetime of the spring brake actuator.

Moving the internal breather valve to a radial offset, away from the stroke axis, puts the internal breather valve in a section of the spring brake piston where venting is unhindered by inner or outer peripheral elements adjacent to the piston, and where the mechanical stress acting on the piston is not at its peak. This contributes to the longevity of the spring brake actuator design.

In a further preferred embodiment, the spring brake actuator comprises a check valve. The check valve is preferably installed in the air passage and configured to close the air passage upon pressure building up in the service pressure chamber. Such a check valve is particularly useful when the service brake function and the parking brake function are activated at the same time. When this occurs, i.e. when the parking pressure chamber is vented while the service pressure chamber is being pressurized, the force provided by the compression spring acts on the braking system in addition to the force corresponding to the service brake pressure in the service brake pressure chamber. This effect is called force compounding. Force compounding results in additional stress on the mechanical parts of the spring brake actuator and potentially also onto any brake mechanism coupled to the spring brake actuator, Thus, force compounding may negatively affect the lifespan of the parts involved. Employing a check valve in the air passage which closes when service brake pressure is built up in the pressure chamber immediately alleviates this problem: Once the air passage is closed, any continued expansion of the compression spring, i.e. volume increase in the spring chamber, decreases the pressure in the spring chamber and thus decreases dampens the braking force exerted by the spring brake piston assembly. The negative pressure may be sufficiently high at a certain point that the spring brake piston assembly is prevented from fully extending.

In a further preferred embodiment, the ram portion comprises a first end facing towards the compression spring and an opposite second end facing away from the compression spring, and the check valve is positioned at the second end. The check valve may be provided at the very end of the ram portion, or close to the end, i.e. in the last quarter of the ram portion, for example. The main purpose here is that the check valve may interact with the service pressure chamber already when the ram portion is in a partially extended position, and not only in its fully extended position. The sooner the check valve begins to interact with the service pressure chamber in case of pressure build up therein, the sooner a negative pressure can be provided in the spring chamber as a result of movement of the spring brake piston assembly.

In a further preferred embodiment, the air passage comprises a lateral end portion opening towards the service pressure chamber, and the check valve is disposed in the lateral end portion. Preferably, the lateral end portion is oriented at an angle to the stroke axis, preferably perpendicularly to the stroke axis. Positioning the air passage laterally on the ram portion prevents to the further functional components inside the service chamber, for example a diaphragm or similar elements, from inadvertently obstructing the air passage and contributes to failsafe operation of the check valve.

In a further preferred embodiment, the spring brake actuator comprises a mechanical release bolt, and said release bold is arranged at least partially inside the air passage. In other words, the ram portion of the spring brake piston assembly may in preferred embodiments be configured as a hollow tube which houses the mechanical release bolt, and the volume inside the ram portion is at the same time also used as air passage for the venting function of the internal breather valve. That way, no additional hardware components need to be installed to provide for a proper functioning of the internal breather valve in this new position according to the invention

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and disclaimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figure (hereinafter: Fig.) to which reference will be made shows a schematic cross sectional view of a spring brake actuator according to a preferred embodiment.

Fig. shows a spring brake actuator 1 for use in a commercial vehicle. The spring brake actuator 1 comprises a brake cylinder 2 having a first housing part 3. The first housing part 3 comprises a brake cylinder base 5. On the brake cylinder base 5, a spring seat 7 is provided. Inside the brake cylinder 2, the spring brake actuator 1 comprises a spring brake piston assembly 9 which is configured to reciprocate between a retracted position (shown in Fig.) and an extended position(not shown) which would be more to the right as compared to the state shown in Fig.

In between the spring brake piston assembly 9 and the brake cylinder base 5, a compression spring 11 is arranged engaging the spring seat 7. The compression spring 11 is biased against the spring brake piston assembly 9 and effective to push the spring brake piston assembly 9 away from the brake cylinder base 5.

The brake cylinder 2 comprises a second housing part 13 which preferably is a flange portion. The first housing part 3 is sealingly connected to the second housing part 13.

The spring brake piston assembly 9 comprises a piston 15 that slidingly and sealingly engages the first housing part 3 through a sealing element 17. The spring brake piston assembly 9 further comprises a ram portion 19 extending along a stroke axis L through a corresponding ram passage 20 of the second housing part 13. Accordingly, the piston 15 compartmentalizes the volume defined by the first and second housing parts 3,13 into a spring chamber 12 and a parking pressure chamber 14. The ram portion comprises a first end 28 facing the compression spring 11 and a second end 29 facing away from the compression spring 11, i.e. facing towards the second housing part 13 when in the retracted position.

The spring brake piston 15 comprises a recess 16 extending through the piston 15 from the spring chamber 12 to the parking brake pressure chamber 14. An internal breather valve 21 is fitted into the recess 16 of piston 15, preferably by corresponding threaded portions. The internal breather valve 21 is configured to allow fluid communication directly between the spring chamber 12 and the parking pressure chamber 14. The internal breather valve 21 is configured to close upon pressure building up in the parking pressure chamber 14 and further configured to open upon pressure in the parking pressure chamber 14 dropping below a predetermined threshold to allow for the pressure compensation.

Thus, when in operation, the internal breather valve 21 provides a pressure compensation directly between the service chamber 12 and the parking pressure chamber 14 when the air pressure in said parking pressure chamber 14 is released for activation of the parking brake functionality, for example. As soon as the pressure inside the parking pressure chamber 14 drops below a predetermined threshold value, the internal breather valve 21 is configured to transition from a closed state to an open state such that pressure reduction and ultimately negative pressure building up inside the spring chamber due to the movement of the spring brake piston assembly 9 is compensated directly by withdrawing residual air from the pressure chamber 14. Hereby, pressure compensation in the spring chamber 12 is made completely independent of the state of the remaining braking system.

The spring brake piston assembly 9 extends, and is configured to move, coaxially to the stroke axis L, wherein the internal breather valve 21 is positioned at a radial offset 26 from the stroke axis L, preferably parallel to the stroke axis L.

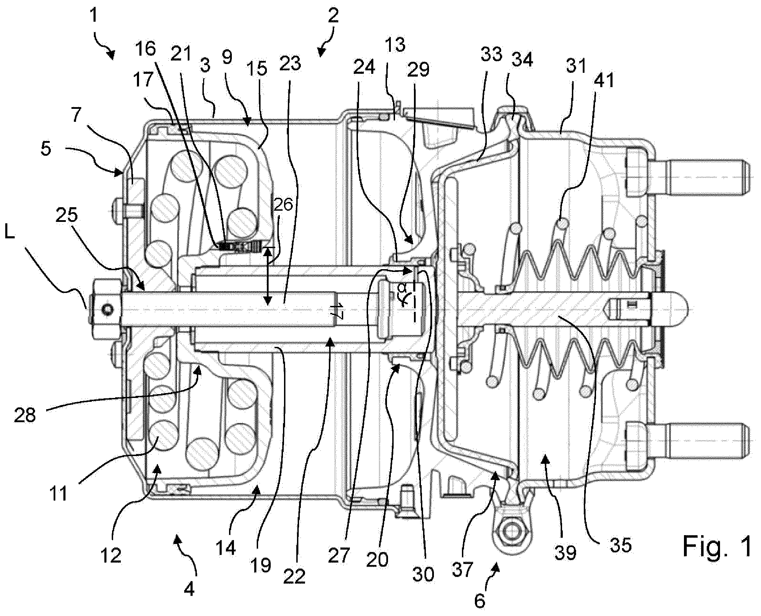

The ram portion 19 comprises an internal air passage 22 that is in fluid communication with the spring chamber 12. The spring brake actuator 1 further comprises a third housing part 31 which is sealingly connected to the second housing part 13. The spring brake actuator 1 further comprises a diaphragm 33 which is sealingly connected, namely interposed, between the second housing part 13 and the third housing part 31 with an annular flange 34 provided on its outer periphery. The diaphragm 33 is in contact with a push rod 35. The push rod 35 is configured to reciprocate between a retained position (shown in Fig. 1) and an extended position (not shown in Fig. 1) in which the push rod 35 transmits the brake force coming from the spring brake piston assembly 9 onto an external brake mechanism (not shown). A service pressure chamber 37 and a push rod chamber 39 are defined between the diaphragm 33 and the second housing part 13. The push rod chamber 39 comprises a return spring 41 configured to urge the push rod 35 towards the retained position.

The service pressure chamber 37 is in fluid communication with the ram portion 19 through the internal air passage 22. The ram portion 19 is configured to extend into the service pressure chamber 37 when moving towards the extended position, wherein the ram portion 19 comprises the internal air passage 22 for fluid communication between the spring chamber 12 and the service pressure chamber 37. The spring brake actuator 1 further comprises a sealing element 24 that engages the ram portion 19 and is positioned to close the air passage 22 when the spring brake piston assembly 9 is in the retracted position, and to open the air passage when the spring brake piston assembly 9 is in the extended position. Fluid transport is allowed to bypass the parking pressure chamber 14 through the air passage 22 inside the ram portion 19.

In this manner, when the activation of the parking brake function is no longer required, and the parking pressure chamber 14 is pressurized again, air can be withdrawn from the spring chamber 12 through the air passage 22. The internal breather valve will be closed at a certain point, namely, when the pressure inside the parking pressure chamber 14 exceeds the predetermined threshold, but by virtue of the air passage 22, air can stream out of the spring brake actuator 1 through the service pressure chamber 37, which is normally open to atmosphere when the parking pressure chamber 14 is being pressurized. The sealing element 24 prevents unwanted bleeding of air through the air passage 22 when the spring brake piston assembly 9 is in the retracted position. The air passage 22 is held sealingly closed by this sealing element 24 in that position.

The spring brake actuator 1 optionally comprises a check valve 27 that is installed in the air passage 22 and configured to close the air passage 22 upon pressure building up in the service pressure chamber 37. The check valve 27 is preferably is mounted at the second end 29 of the ram portion 19. Particularly preferred, the check valve 27 is inserted in a lateral end portion 30 that opens towards the service pressure chamber 37. The lateral end portion 30 is preferably oriented at an angle α to the stroke axis (L), said angle α preferably being 90° to the stroke axis (L).

If, during operation of the spring brake actuator 1, the scenario arises that a service brake pressure is introduced into the service pressure chamber 37 by an operator command while the parking brake function is also active, i.e. the parking brake pressure chamber 14 is also pressurized, the check valve serves to hinder further movement of the spring brake piston assembly 9. By closing off the fluid communication between the service pressure chamber 37 and the air passage 22, air can no longer enter the spring chamber 12 through the air passage 22. At the same time, the internal breather valve 21 will in this scenario also remain closed due to the pressurization of the parking brake pressure chamber 14 above the predetermined threshold value. Thus, as soon as the check valve 27 closes, any further movement of the spring brake piston assembly 9 towards the extended position will lead to pressure reduction and ultimately negative pressure build-up inside the spring chamber 12, which acts against the force exerted by the compression spring 11. The effect of force compounding between the spring brake piston assembly 9 and the push rod 35 due to the service brake pressure in service pressure chamber 37 is thus at least partially mitigated.

The spring brake actuator 1 comprises a mechanical release bolt 23 permanently installed on the brake cylinder 2 and in threaded engagement with a thread portion 25 provided in the brake cylinder base 5. The release bolt 23 is configured to engage the spring brake piston assembly 9. By rotating the release bolt 23, it is possible to manually move the spring brake piston assembly 9 between the extended position back and the retracted position.

Advantageously, the mechanical release bolt 23 is installed in a hollow portion of the spring brake piston assembly 9, namely, inside the ram portion 19. The air passage 22 thus has a dual function of accommodating the release bolt 23 and serving as an air vent for the spring chamber during compression movement of the spring brake piston assembly 9.

The spring brake actuator 1 further comprises a third housing part 31 which is sealingly connected to the second housing part 13.

The first housing part 3 and part of the second housing portion 13 define a spring brake portion 4, while the third housing portion 31 and part of the second housing part define a service brake portion 6 of the spring brake actuator 1. The sealing element 24 is arranged in the ram passage 20 of the second housing part, i.e. flange portion 13.

The spring brake actuator 1 further comprises a diaphragm 33 which is sealingly connected, namely interposed, between the second housing part 13 and the third housing part 31 with an annular flange 34 provided on its outer periphery. The diaphragm 33 is in contact with a push rod 35. The push rod 35 is configured to reciprocate between a retained position (shown in Fig.) and an extended position (not shown in Fig.) in which the push rod 35 transmits the brake force coming from the spring brake piston assembly 9 onto an external brake mechanism (not shown). A service pressure chamber 37 and a push rod chamber 39 are defined between the diaphragm 33 and the second housing part 13. The push rod chamber 39 comprises a return spring 41 configured to urge the push rod 35 towards the retained position.

The service pressure chamber 37 is in fluid communication with the ram portion 19 through the internal air passage 22.

### List of reference signs (Part of the description)

- 1: spring brake actuator
- 2: brake cylinder
- 3: first housing part
- 4: spring brake portion
- 5: brake cylinder base
- 6: service brake portion
- 7: spring seat
- 9: spring brake piston assembly
- 11: compression spring
- 12: spring chamber
- 13: second housing part
- 14: parking brake pressure chamber
- 15: piston
- 16: recess
- 17: sealing element
- 19: portion
- 20: passage
- 21: internal breather valve
- 22: internal air passage
- 23: mechanical release bolt
- 24: sealing element
- 25: thread portion
- 26: radial offset
- 27: check valve
- 28: first end
- 29: second end
- 30: lateral end portion
- 31: third housing part
- 33: diaphragm
- 34: annular flange
- 35: push rod
- 37: service pressure chamber
- 39: push rod chamber
- 41: return spring
- L: stroke axis
- α: angle

## Claims

1. A spring brake actuator (1) for an air brake system of a motor vehicle, in particular of a commercial vehicle, comprising
a brake cylinder (2) having a spring chamber (12), a parking pressure chamber (14), and a spring brake piston assembly (9) that is movably disposed inside the brake cylinder (2) and sealingly separates the spring chamber (12) from the parking pressure chamber (14),
wherein the spring chamber (12) comprises a compression spring (11) that is configured to push the spring brake piston assembly (9) from a retracted position towards an extended position as a function of pressurized air being released from the parking pressure chamber (14), wherein the spring brake piston assembly (9) is configured to move towards the retracted position as a function of pressurized air being introduced into the parking pressure chamber (14); and
an internal breather valve (21) in fluid communication with the spring chamber (12) and configured to allow for pressure compensation in the spring chamber (12) when the spring brake piston assembly (9) moves towards the extended position;
**characterized in that** the internal breather valve (21) is mounted to the spring brake piston assembly (9) in direct fluid communication between the spring chamber (12) and the parking pressure chamber (14).

2. The spring brake actuator (1) of claim 1,
wherein the internal breather valve (21) is configured to close upon pressure building up in the parking pressure chamber (14) and further configured to open upon pressure in the parking pressure chamber (14) dropping below a predetermined threshold to allow for the pressure compensation.

3. The spring brake actuator (1) of claim 1 or 2,
comprising a service pressure chamber, wherein the spring brake piston assembly (9) comprises a ram portion (19) that is configured to extend into the service pressure chamber (37) when moving towards the extended position, wherein the ram portion (19) comprises an internal air passage (22) for fluid communication between the spring chamber (12) and the service pressure chamber (37); wherein the spring brake actuator (1) further comprises a sealing element (24) that engages the ram portion (19) and is positioned to close the air passage (22) when the spring brake piston assembly (9) is in the retracted position, and to open the air passage (22) when the spring brake piston assembly (9) is in the extended position.

4. The spring brake actuator (1) of claim 3,
comprising a flange portion (13), wherein the brake cyclinder (2) comprises a spring brake portion (4) and a service brake portion (6), both mounted to the flange portion (13), and the flange portion (13) comprises a ram passage (20) extending through the flange portion (13) generally coaxially to the stroke axis (L), and wherein the sealing element (24) is arranged adjacent to, preferably inside of, the ram passage (20).

5. The spring brake actuator (1) of any one of the preceding claims,
wherein the spring brake piston assembly (9) comprises a piston (15) that slidingly and sealingly engages the brake cylinder (2), and the internal breather valve (21) is arranged in a recess (16) extending through the piston (15) from the spring chamber (12) to the parking brake pressure chamber (14).

6. The spring brake actuator (1) of claim 4 or 5,
comprising a stroke axis (L), wherein the spring brake piston assembly (9) extends, and is configured to move, preferably coaxially, along the stroke axis (L), wherein the internal breather valve (21) is preferably positioned at a radial offset (26) from the stroke axis (L), preferably parallel to the stroke axis (L).

7. The spring brake actuator (1) of any one of claims 3 to 6,
comprising a check valve (27) that is installed in the air passage (22) and configured to close the air passage (22) upon pressure building up in the service pressure chamber (37).

8. The spring brake actuator (1) of claim 7,
wherein the ram portion (19) comprises a first end (28) facing towards the compression spring (11) and an opposite second end (29) facing away from the compression spring (11), and the check valve (27) is positioned at the second end (29).

9. The spring brake actuator (1) of claim 7 or 8,
wherein the air passage (22) comprises a lateral end portion (30) opening towards the service pressure chamber (37), and the check valve (27) is disposed in the lateral end portion (30).

10. The spring brake actuator (1) of claim 9,
wherein the lateral end portion (30) is oriented at an angle (α) to the stroke axis (L), preferably perpendicularly to the stroke axis (L).

11. The spring brake actuator (1) of any one of claims 3 to 10,
comprising a mechanical release bolt (23), wherein the release bolt (23) is arranged at least partially inside the air passage (22).
